# EUROPÄISCHE PATENTANMELDUNG

(11) **EP 1 270 981 A2**
(43) Veröffentlichungstag der Anmeldung: **02.01.2003**
(21) Anmeldenummer: 02011460.9
(22) Anmeldetag: 24.05.2002
(51) Int. Cl.: F16D 55/40

(54) **Radnabenbremse für eine Arbeitsmaschine**

(30) Priorität: 27.06.2001 DE 10130930
(71) Anmelder: STILL GMBH, D-22113 Hamburg (DE)
(72) Erfinder: Schröder, Werner-Georg, 63762 Grossostheim (DE); Raab, Stephan, 83370 Seeon (DE)
(74) Vertreter: Lang, Michael

(57) **Zusammenfassung**

Gegenstand der Erfindung ist eine Bremsvorrichtung, vorzugsweise Radnabenbremse für ein Fahrzeug, bei der ein drehbarer Abtriebskörper (2) an einem nicht drehbaren Achskörper (1) gelagert ist. Mit dem Abtriebskörper (2) ist mindestens eine drehbare Bremsscheibe (8) und mit dem Achskörper (1) ist mindestens eine nicht drehbare Bremsscheibe (7) verbunden, wobei:
- mindestens eine Federanordnung (14) vorgesehen ist, mit der die Bremsscheiben (7, 8) aufeinander pressbar sind,
- mindestens ein Bremslüftglied (9) vorgesehen ist, mit der die Bremsscheiben (7, 8) entgegen der Kraft der Federanordnung (14) voneinander lösbar sind,
- mindestens ein Stellglied (11) vorgesehen ist, mit der die Bremsscheiben (7, 8) unabhängig von der Federanordnung (14) aufeinander pressbar sind.
Erfindungsgemäß ist auf jeder Seite der Bremsscheiben (7, 8) jeweils ein in axialer Richtung verschiebbarer Druckkörper (5, 6) vorgesehen, wobei die Bremsscheiben (7, 8) durch axiales Verschieben mindestens eines Druckkörpers (5, 6) aufeinander pressbar sind. Der erste Druckkörper (5) ist mittels der Kraft der Federanordnung verschiebbar und der zweite Druckkörper (6) ist mittels der Kraft des Stellglieds (11) verschiebbar.

## Beschreibung

Die Erfindung betrifft eine Bremsvorrichtung, vorzugsweise Radnabenbremse für ein Fahrzeug, bei der ein drehbarer Abtriebskörper an einem nicht drehbaren Achskörper gelagert ist, wobei mit dem Abtriebskörper mindestens eine drehbare Bremsscheibe und mit dem Achskörper mindestens eine nicht drehbare Bremsscheibe verbunden ist, wobei mindestens eine Federanordnung vorgesehen ist, mit der die Bremsscheiben aufeinander pressbar sind, mindestens ein Bremslüftglied vorgesehen ist, mit der die Bremsscheiben entgegen der Kraft der Federanordnung voneinander lösbar sind und mindestens ein Stellglied vorgesehen ist, mit der die Bremsscheiben unabhängig von der Federanordnung aufeinander pressbar sind.

Bremsvorrichtungen der genannten Art werden häufig in Fahrzeugen wie mobilen Arbeitsmaschinen, insbesondere in Flurförderzeugen eingesetzt. Die Bremsvorrichtung kann dabei als Radnabenbremse oder als zentrale Achsbremse ausgebildet sein. Die als Scheibenbremse oder Lamellenbremse ausgeführte Bremse erfüllt die Funktionen einer Federspeicherfeststellbremse und einer Betriebsbremse. In der Funktion als Parkbremse werden die Bremsscheiben mit der Kraft der Federanordnung aufeinander gepresst, so dass die Bremse betätigt ist. Mittels des Bremslüftglieds kann die Bremse entgegen der Kraft der Federanordnung gelöst werden. Während des Betriebs des Fahrzeugs kann die Bremsvorrichtung als Betriebsbremse eingesetzt werden, wobei die Bremsscheiben mittels des Stellglieds unabhängig von dem Zustand der Federanordnung oder des Bremslüftglieds aufeinander gepresst werden können.

Der vorliegenden Erfindung liegt die Aufgabe zugrunde, eine einfach aufgebaute, Bremsvorrichtung der eingangs genannten Art zur Verfügung zu stellen, die platzsparend, z.B. innerhalb einer Fahrzeugfelge angeordnet werden kann.

Diese Aufgabe wird erfindungsgemäß dadurch gelöst, dass auf jeder Seite der Bremsscheiben jeweils ein in axialer Richtung verschiebbarer Druckkörper vorgesehen ist, wobei die Bremsscheiben durch axiales Verschieben mindestens eines Druckkörpers aufeinander pressbar sind und wobei der erste Druckkörper mittels der Kraft der Federanordnung verschiebbar ist und der zweite Druckkörper mittels der Kraft des Stellglieds verschiebbar ist. Die Bremsscheiben befinden sich somit zwischen dem ersten und dem zweiten Druckkörper und können durch Bewegen mindestens eines Druckkörpers aufeinander gepresst werden. Jeder der Druckkörper ist in axialer Richtung, also parallel zu der Mittelachse der Bremsscheiben verschiebbar an dem nicht drehbaren Achskörper geführt. Die Kräfte der Federanordnung und des Lüftglieds wirken dabei auf den ersten Druckkörper, während die Kraft des Stellglieds auf den zweiten Druckkörper wirkt.

Gemäß einer zweckmäßigen Ausgestaltung der Erfindung ist die mit der Federanordnung erzeugbare Kraft über den ersten Druckkörper und die Bremsscheiben an dem zweiten Druckkörper abstützbar. Der zweite Druckkörper stützt diese Kraft wiederum an dem Stellglied oder an dem Achskörper ab.

Analog hierzu ist die mit dem Stellglied erzeugbare Kraft über den zweiten Druckkörper und die Bremsscheiben an dem ersten Druckkörper abstützbar. Der erste Druckkörper stützt sich dabei wiederum an der Federanordnung oder an dem Achskörper ab.

Weiterhin ist ein Bremslüftglied vorgesehen, dessen Kraft über den ersten Druckkörper an der Federanordnung abstützbar ist. Mit dem Bremslüftglied kann somit die Federanordnung gespannt werden, gleichzeitig wird der erste Druckkörper von den Bremsscheiben weg bewegt, so dass die Parkbremse gelöst wird.

Mindestens eine nicht drehbare Bremsscheibe ist an dem ersten Druckkörper drehstarr befestigt. Das Bremsmoment wird somit von der nicht drehbaren Bremsscheibe auf den ersten Druckkörper übertragen, der sich an dem Achskörper abstützt. Die Bremsscheibe ist jedoch gegenüber dem Druckkörper in axialer Richtung zumindest geringfügig verschiebbar.

Hierbei ist der erste Druckkörper an dem nicht drehbaren Achskörper in axialer Richtung verschiebbar geführt.

Mindestens eine drehbare Bremsscheibe ist drehstarr mit dem Abtriebskörper verbunden. Diese drehbare Bremsscheibe ist dabei relativ zu dem Abtriebskörper zumindest geringfügig verschiebbar.

Eine besonders zweckmäßige Ausgestaltung der Erfindung ergibt sich, wenn das Stellglied und/oder das Bremslüftglied von hydraulischen Druckräumen gebildet sind.

Ein besonders einfacher Aufbau mit einer besonders einfach gestalteten Hydraulikölzufuhr ergibt sich, wenn mit dem Stellglied und dem Bremslüftglied gleichgerichtete Druckkräfte erzeugbar sind. Die hydraulischen Druckräume werden dabei von Hohlräumen gebildet, die einerseits von dem nicht bewegbaren Achskörper und andererseits von jeweils einem verschiebbaren Druckkörper gebildet sind. Die Druckkörper können mittels eines im entsprechenden Druckraum anstehenden Hydraulikdrucks jeweils parallel zueinander in die gleiche Richtung bewegt werden.

Eine besonders raumsparende Anordnung ergibt sich, wenn die Federanordnung radial innerhalb der Bremsscheiben angeordnet ist.

Die erforderlichen Federkräfte werden platzsparend erreicht, wenn die Federanordnung von Tellerfedern gebildet ist.

Die erforderlichen Bremsmomente können bei beherrschbaren Betätigungskräften auf einfache Weise erreicht werden, wenn die Bremsscheiben als Bremslamellen ausgeführt sind. Bei einer Lamellenbremse sind abwechselnd drehbare und nicht drehbare Bremsscheiben angeordnet, die während eines Bremsvorgangs aufeinander gepresst werden.

Weitere Vorteile und Einzelheiten der Erfindung werden anhand des in der schematischen Figur dargestellten Ausführungsbeispiels näher erläutert.

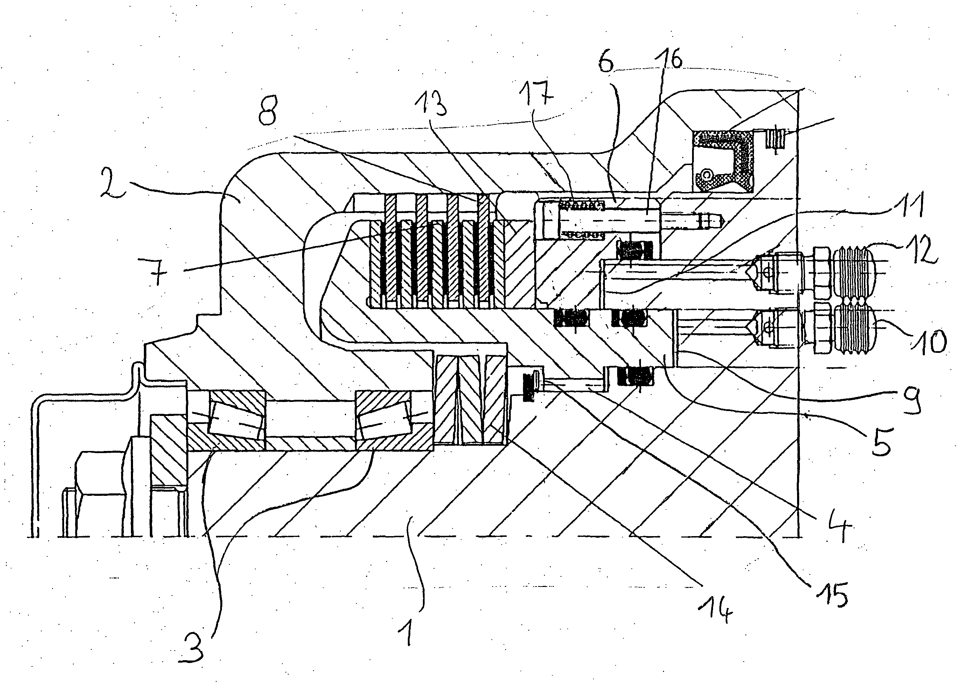

Die Figur zeigt eine als Radnabenbremse ausgeführte erfindungsgemäße Bremsvorrichtung. An einem nicht drehbaren Achskörper 1 ist ein Abtriebskörper 2 mittels Wälzlagern 3 drehbar gelagert. Mittels einer Keilverzahnung 4 ist ein erster Druckkörper 5 drehstarr, jedoch in axialer Richtung verschiebbar an dem Achskörper 1 befestigt. Der linksseitige Anschlag für den ersten Druckkörper 5 kann mittels Ausgleichsringen 15 eingestellt werden. Ein zweiter Druckkörper 6 ist relativ zu dem Achskörper 2 ebenfalls in axialer Richtung verschiebbar. Eine mit einer Schraube 16 gehaltene Rückholfeder 17 erzeugt auf den zweiten Druckkörper 6 eine nach in der Zeichnung rechts gerichtete Rückstellkraft. Zwischen den beiden Druckkörpern 5, 6 befinden sich die als Bremslamellen ausgeführten Bremsscheiben 7, 8, wobei die nicht drehbaren Bremsscheiben 7 an dem ersten Druckkörper 5 und die drehbaren Bremsscheiben 8 an dem Abtriebskörper 2 drehstarr, jedoch in axialer Richtung geringfügig verschiebbar gelagert sind. Darüber hinaus befindet sich in der vorliegenden Anordnung zwischen den Bremsscheiben 7, 8 und dem zweiten Druckkörper ein Zwischenstück 13 zum Übertragen von Druckkräften.

Stirnseitig des ersten Druckkörpers 5 befindet sich ein ringförmiger Druckraum, der im Folgenden als Bremslüftglied 9 bezeichnet wird und über einen Hydraulikölanschluss 10 mit Drucköl beaufschlagbar ist. Ein zweiter ringförmiger Druckraum wird im Folgenden als Stellglied 11 bezeichnet, befindet sich an einer Stirnseite des zweiten Druckkörpers 6 und ist mit einem Hydraulikölanschluss 12 verbunden. Zwischen dem Achskörper 1 und dem ersten Druckkörper 5 befindet sich eine von einem Tellerfederpaket gebildete Federanordnung 14, die sich achskörperseitig an dem nicht rotierenden Innenring eines Wälzlagers 3 abstützt.

Die Bremsvorrichtung ist in Ihrer Stellung als Parkbremse dargestellt, bei der das Bremslüftglied 9 und das Stellglied 11 nicht mit Druck beaufschlagt sind. Die Federanordnung 14 drückt den ersten Druckkörper 5 nach in der Zeichnung rechts. Der Druckkörper 5 stützt sich über die Bremsscheiben 7, 8, das Zwischenstück 13, und den zweiten Druckkörper 6 an dem Achskörper 1 ab. Die auf die Bremsscheiben 7, 8 wirkende Druckkraft ist durch die Kraft der Federanordnung 14 vorgegeben und liegt automatisch an, wenn sich das Fahrzeug außer Betrieb befindet.

Um die Parkbremse zu lösen, wird das Bremslüftglied 9 mit Druck beaufschlagt, so dass sich der erste Druckkörper 5 entgegen der Kraft der Federanordnung 14 nach in der Zeichnung links bewegt wird. Die Bremsscheiben 7, 8 sind damit nicht mehr aneinander gepresst, so dass der Abtriebskörper 2 frei drehbar ist.

Wenn der in dem Bremslüftglied 9 anstehende Hydraulikdruck zum Lösen der Parkbremse nicht ausreicht, kann der erste Druckkörper 5 auch mittels der Kraft des Stellglieds 11 nach links verschoben werden. Hierzu wird das Stellglied 11 mit Hydraulikdruck, welcher beispielsweise von einer Bedienperson aktiv mittels eines Bremspedals erzeugt werden kann, beaufschlagt. Damit wird der zweite Druckkörper 6 gemeinsam mit dem Zwischenstück 13, den Bremsscheiben 7, 8 und dem ersten Druckkörper 5 nach in der Zeichnung links verschoben, so dass die Federanordnung 14 gespannt wird. Die Hydraulikölzufuhr zu dem Bremslüftglied 9 wird anschließend gesperrt, um den ersten Druckkörper 5 in seiner nach links verschobenen Position zu arretieren, so dass die Parkbremse auch nach einem Druckabbau im Stellglied 11 gelöst bleibt.

Während des Betriebs des Fahrzeugs, wenn also der erste Druckkörper 5 mittels des Bremslüftglieds 9 an seinem linken Anschlag gehalten wird, kann die Bremsvorrichtung mittels des Stellglieds 11 in der Funktion als Betriebsbremse betätigt werden. Hierfür wird das Stellglied 11 mit Druck beaufschlagt, wobei sich der zweite Druckkörper 6 dann über die Bremsscheiben 7, 8, den ersten Druckkörper 5 und die Ausgleichsringe 15 an dem Achskörper 1 abstützt. Die auf die Bremsscheiben 7, 8 wirkende Kraft und damit das Bremsmoment der Bremsvorrichtung ist direkt abhängig von der Höhe des von der Bedienperson erzeugbaren Drucks im Stellglied 11.

Die vorliegende Bremsvorrichtung erfüllt die Anforderungen der Straßenverkehrszulassungsordnung, da die Parkbremse mittels des Lüftglieds 9, aber auch mittels des Stellglieds 11 gelöst werden kann. Darüber hinaus ist mit einer geeigneten Vorrichtung auch ein mechanisches Lüften der Parkbremse möglich.

## Patentansprüche

1. Bremsvorrichtung, vorzugsweise Radnabenbremse für ein Fahrzeug, bei der ein drehbarer Abtriebskörper (2) an einem nicht drehbaren Achskörper (1) gelagert ist, wobei mit dem Abtriebskörper (2) mindestens eine drehbare Bremsscheibe (8) und mit dem Achskörper (1) mindestens eine nicht drehbare Bremsscheibe (7) verbunden ist, wobei:
- mindestens eine Federanordnung (14) vorgesehen ist, mit der die Bremsscheiben (7, 8) aufeinander pressbar sind,
- mindestens ein Bremslüftglied (9) vorgesehen ist, mit der die Bremsscheiben (7, 8) entgegen der Kraft der Federanordnung (14) voneinander lösbar sind,
- mindestens ein Stellglied (11) vorgesehen ist, mit der die Bremsscheiben (7, 8) unabhängig von der Federanordnung (14) aufeinander pressbar sind,
**dadurch gekennzeichnet, dass** auf jeder Seite der Bremsscheiben (7, 8) jeweils ein in axialer Richtung verschiebbarer Druckkörper (5, 6) vorgesehen ist, wobei die Bremsscheiben (7, 8) durch axiales Verschieben mindestens eines Druckkörpers (5, 6) aufeinander pressbar sind und wobei der erste Druckkörper (5) mittels der Kraft der Federanordnung verschiebbar ist und der zweite Druckkörper (6) mittels der Kraft des Stellglieds (11) verschiebbar ist.

2. Bremsvorrichtung nach Anspruch 1, **dadurch gekennzeichnet, dass** die mit der Federanordnung (14) erzeugbare Kraft über den ersten Druckkörper (5) und die Bremsscheiben (7, 8) an dem zweiten Druckkörper (6) abstützbar ist.

3. Bremsvorrichtung nach Anspruch 1 oder 2, **dadurch gekennzeichnet, dass** die mit dem Stellglied (11) erzeugbare Kraft über den zweiten Druckkörper (6) und die Bremsscheiben (7, 8) an dem ersten Druckkörper (5) abstützbar ist.

4. Bremsvorrichtung nach einem der Ansprüche 1 bis 3, **dadurch gekennzeichnet, dass** ein Bremslüftglied (9) vorgesehen ist, dessen Kraft über den ersten Druckkörper (5) an der Federanordnung (14) abstützbar ist.

5. Bremsvorrichtung nach einem der Ansprüche 1 bis 4, **dadurch gekennzeichnet, dass** mindestens eine nicht drehbare Bremsscheibe (7) an dem ersten Druckkörper (5) drehstarr befestigt ist.

6. Bremsvorrichtung nach einem der Ansprüche 1 bis 5, **dadurch gekennzeichnet, dass** der erste Druckkörper (5) an dem nicht drehbaren Achskörper (1) in axialer Richtung verschiebbar geführt ist.

7. Bremsvorrichtung nach einem der Ansprüche 1 bis 6, **dadurch gekennzeichnet, dass** mindestens eine drehbare Bremsscheibe (8) drehstarr mit dem Abtriebskörper (2) verbunden ist.

8. Bremsvorrichtung nach einem der Ansprüche 3 bis 7, **dadurch gekennzeichnet, dass** das Stellglied (11) und/oder das Bremslüftglied (9) von hydraulischen Druckräumen gebildet sind.

9. Bremsvorrichtung nach einem der Ansprüche 3 bis 8, **dadurch gekennzeichnet, dass** mit dem Stellglied (11) und dem Bremslüftglied (9) gleichgerichtete Druckkräfte erzeugbar sind.

10. Bremsvorrichtung nach einem der Ansprüche 1 bis 9, **dadurch gekennzeichnet, dass** die Federanordnung (14) radial innerhalb der Bremsscheiben (7, 8) angeordnet ist.

11. Bremsvorrichtung nach einem der Ansprüche 1 bis 10, **dadurch gekennzeichnet, dass** die Federanordnung (14) von Tellerfedem gebildet ist.

12. Bremsvorrichtung nach einem der Ansprüche 1 bis 11, **dadurch gekennzeichnet, dass** die Bremsscheiben (7, 8) als Bremslamellen ausgeführt sind.
